# EUROPEAN PATENT APPLICATION

(11) **EP 1 084 793 A1**
(43) Date of publication of application: **21.03.2001**
(21) Application number: 00307589.2
(22) Date of filing: 04.09.2000
(51) Int. Cl.: B23P 15/10, F02F 3/00, F02F 3/22, F02F 3/28, F16J 1/00

(54) **Method of manufacturing piston of internal combustion engine**

(30) Priority: 20.09.1999 JP 26565799; 08.10.1999 JP 28749599
(71) Applicant: Riken Forge Co., Ltd, Maebashi-shi, Gunma-ken (JP)
(72) Inventor: Honda, Yoneichi. c/o Riken Force Co.,Ltd., Maebashi-shi, Gunma-ken (JP); Koizumi, Mikio. c/o Riken Force Co.,Ltd., Maebashi-shi, Gunma-ken (JP); Tamura, Ikuo. c/o Riken Force Co.,Ltd., Maebashi-shi, Gunma-ken (JP); Kawahara, Takayuki. c/o Riken Force Co.,Ltd., Maebashi-shi, Gunma-ken (JP)
(74) Representative: Gibson, Stewart Harry

(57) **Abstract**

The top land section 2 and the skirt section 3 of a piston of an internal combustion engine are separately formed by forging a metal material that shows a satisfactory level of strength and can easily be cut. A ring member 9 of a thermally resistive metal material is bonded by forging to the periphery of the opening of the cavity 7 of the piston and the top land section 2 and the skirt section 3 are bonded along the dividing surfaces 10 by solid phase bonding, diffusion bonding or electron beam welding. Alternatively, the top land section 2 and the skirt section 3 may be formed separately by forging so as to produce an annular cavity 8 when they are bonded together along the dividing surfaces 30 that are exposed to the annular cavity 8 by solid phase bonding, diffusion bonding or electron beam welding.

## Description

### BACKGROUND OF THE INVENTION

This invention relates to a method of manufacturing a piston of internal combustion engine.

Pistons of internal combustion engine comprising a toroidal cavity 21 operating as combustion chamber and arranged at the top of piston main body 20, an annular cavity 22 arranged around the toroidal cavity 21 for circulating cooling liquid such as lubricant oil, a ring belt 26 and rings 27 as shown in FIGS. 9 of the accompanying drawings are known and popularly being used for direct injection type diesel engines. Normally, the top land section and the skirt section having a pinhole are integrally formed in such a piston. Reference numeral 23 in FIG. 9 denotes the cylinder of the engine.

In the internal combustion engine, fuel is injected into the cavity 21 while the air accumulated in the cylinder is compressed by the piston as the latter is raised so that the fuel in the cavity is caused to explode and burn and the piston is driven to tall under the reactive effect of the pressure of explosion. Then, the piston that has been forced to fall by the reaction of the explosion is raised once again to expel the exhaust gas in the cylinder and driven to fall for another time so that fresh air may be drawn into the cylinder under negative pressure for the next cycle of explosion.

Referring to FIG. 9, the residual air remaining on the top of the piston squishes fiercely at and near the upper dead point of compression of the engine if the cavity edge section 24 is made to show a sharp profile, If the cavity edge section 24 has a small radius of curvature, turbulences are produced along the boundaries of the squishing air flows to accelerate the mixing of air and the atomised particles of the fuel injected into the cavity 21 and increase the efficiency of combustion.

However, as the cavity edge section 24 is made to show a sharp profile, it is apt to produce a heat spot there and its thermal resistance is reduced to give rise to fissures (heat cracks) 25 along the periphery of the cavity 21 and curtail the service life of the piston. Therefore, a sharp cavity edge section 24 and fissures 25 are trade-offs.

When looking into the material of the piston from the viewpoint of preventing fissures 25 from being produced in the cavity edge section 24, it will be found that, while aluminium can effectively prevent the temperature of the cavity edge section 24 from rising because of its good thermal conductivity, it cannot effectively prevent the occurrence of fissures and oxidation because it does not show satisfactory strength at high temperature. While this problem may be avoided by molding the cavity edge section 24 in advance by casting or forging and putting it in the aluminium piston at the time of molding the entire piston or by reinforcing the cavity edge section 24 with carbon fibers or metal fibers at the time of molding, such an arrangement raises the manufacturing cost significantly and makes the control of the manufacturing process a rather complex one because it does not involve good metal bonds and hence lacks bonding reliability. Additionally, the arrangement faces limits in terms of explosion pressure and average effective pressure and the piston cannot be used beyond the limits. Iron is a poor conductor of heat if compared with aluminium and therefore the cavity edge section 24 of a cast or forged iron piston is disadvantageous relative to that of an aluminium piston in terms of cooling but has the advantage that it is twice to three times stronger than the aluminium counterpart and hence highly resistive against fissures at high temperature. Meanwhile, a cast iron piston has a fatigue strength, a thermal conductivity and a Young's modulus that are about a half of, about 80% of and lower than the respective counterparts of a forged iron piston so that stress can easily be generated in it by heat. Additionally, the fine graphite particles in the cast iron piston can give rise to a high local concentration of stress. As a whole, a cast iron piston shows a fissure-resistance better than that of an aluminium piston but worse than that of a forged iron piston.

A forged iron piston is satisfactory in terms of the output power level of the engine comprising the piston and the maximum explosion pressure and the average effective pressure of the piston. However, since a forged iron piston is formed in a metal mold by heating the material, the contents of its ingredients are same at any point in the piston. Therefore, for instance, if calcium is added to forged iron in order to improve the easiness of cutting that is inferior to that of aluminium or cast iron, the fissure-resistance of the forged iron piston falls, if slightly, from the original level. Additionally, if carbon is added, the ductility of the cavity edge section 24 becomes unsatisfactory. Thus, while a forged iron piston shows a thermal resistance better than that of an aluminium piston or a cast iron piston particularly in terms of the cavity edge section 24, the easiness of cutting and the strength of the forged iron of the piston are made satisfactory only at the cost of the strength of the cavity edge section 24.

A piston is formed either by forging or by casting. However, it should be noted here that a piston having an annular cavity 22 arranged around the cavity 21 for the purpose of cooling cannot be formed by forging, although it may be formed by casting, using a collapsible core.

In the case of diesel engines, the trend of super-charging is remarkable and the combustion efficiency is improved by encouraging fuel and air to be mixed well by way of swirls and squishes in the cavity 21 in order to achieve a high output power level, while producing clean exhaust gas and reducing the fuel consumption rate. As a result, the cavity edge section 24 is heated to show the highest temperature in the piston. While the temperature of the cavity edge section 24 can be held relatively low in a cast iron piston if an annular cavity 22 is provided for circulating cooling liquid such as lubricant oil around the cavity 21, it is impossible to provide a forged iron piston with such an annular cavity 22 so that fissures can appear along the periphery of the cavity 21 of the forged iron piston that has only a small thermal capacity. Therefore, there is a strong demand for pistons showing an improved thermal resistance and an enhanced mechanical strength.

The ring receiving groove for supporting the uppermost one of the rings 27 is located at a position where the ring can wear quickly because it is beaten most fiercely by the explosion pressure. Additionally, a scuffing phenomenon of lubricant oil appears between the rings 27 and the liner. Thus, the service life of the piston and that of the cylinder will be seriously affected as a result of the collective effect of these phenomena including the generation of fissures along the periphery of the cavity 21. This position can be cooled least from the outside and hence is a position where the anti-wear measures of the piston are least effective.

It is essential to improve the properties of the material and the cooling effect of the piston to suppress the generation of fissures 25, the wear of the uppermost ring and the scuffing of lubricant oil. While an annular ring 22 may be formed around the cavity 21 by using a collapsible core in the case of a cast iron piston as pointed out above, the size of the cooling annular cavity 22 is determined as a function of the manufacturing accuracy of the collapsible core and the annular cavity 22 can provide only a limited cooling effect because of the limited thermal resistance of cast iron and the limited manufacturing accuracy of the collapsible core. No cooling cavity can be formed in a forged iron piston.

Therefore, it is an object of the present invention to provide a method of manufacturing a piston of internal combustion engine adapted to manufacture a piston having a cavity whose periphery is highly resistant against heat and acids.

Another object of the present invention is to provide a method of manufacturing a piston of internal combustion engine having an additional cavity for cooling the cavity from the periphery thereof and provided with anti-wear measures for the uppermost ring and anti-scuffing measures for lubricant oil in the ring receiving grooves.

### BRIEF SUMMARY OF THE INVENTION

According to the invention, the above objects and other objects of the invention are achieved by providing a method of manufacturing a piston of internal combustion engine comprising a top land section with a cavity formed on the top surface thereof and a skirt section, said method comprising:
forming said top land section and said skirt section separately by forging a same material or respective materials that are different from each other; and
bonding and uniting said top land section and said skirt section along the dividing surfaces thereof.

In another aspect of the invention, there is also provided a method of manufacturing a piston of internal combustion engine comprising a top land section with a cavity formed on the top surface thereof and a skirt section, said method comprising:
forming said top land section and said skirt section separately by forging a same material or respective materials that are different from each other; and
bonding and uniting said top land section and said skirt section along the dividing surfaces thereof by forming a ring member around the periphery of the opening of said cavity by forging a metal material highly resistive against heat and acids.

In still another aspect of the invention, there is also provided a method of manufacturing a piston of internal combustion engine comprising a top land section with a cavity formed on the top surface thereof and a skirt section, an cooling annular cavity being formed around said cavity, said method comprising:
forming said top land section and said skirt section separately by forging a same material or respective materials that are different from each other; and
bonding and uniting said top land section and said skirt section along the dividing surfaces thereof.

In a further aspect of the invention, there is also provided a method of manufacturing a piston of internal combustion engine comprising a top land section with a cavity formed on the top surface thereof and a skirt section, an cooling annular cavity being formed around said cavity, said method comprising:
forming a piston main body having a peripheral notch at the top land section and an annular body for filling said peripheral notch by forging, said piston main body and said annular body being separated from each other by a first dividing surface including said annular cavity and a second dividing surface including part of the top surface of the top land section and the annular cavity and arranged perpendicularly relative to said first dividing surface, said first and second dividing surfaces being exposed to the periphery of said top land section; and
bonding and uniting said piston main body and said annular body along said first and second dividing surfaces.

Preferably, the dividing surfaces separating the top land section and the skirt section are united by solid phase bonding, utilizing the friction generated under pressure, diffusion bonding or electron beam welding.

### BRIEF DESCRIPTION OF THE DRAWINGS

FIG. 1 is a schematic cross sectional view of a principal part of a finished piston manufactured by a first embodiment of method according to the invention.
FIG. 2 is a schematic cross sectional view of also a principal part of a piston manufactured by a method according to the invention, where the top land section and the skirt section that are formed separately by forging are not united together by utilizing the friction generated under pressure yet.
FIGS. 3A and 3B are schematic cross sectional views of a ring member bonded to the top surface of the top land section of a piston manufactured by a method according to the invention, as shown in two different manufacturing steps.
FIGS. 4A and 4B are schematic cross sectional views of another ring member bonded to the top surface of the top land section of a piston manufactured by a method according to the invention, as shown in two different manufacturing steps.
FIGS. 5A, 5B and 5C are schematic cross sectional views of still another ring member bonded to the top surface of the top land section of a piston manufactured by a method according to the invention, as shown in two different manufacturing steps.
FIG. 6 is a schematic cross sectional view of a principal part of a piston manufactured by a second embodiment of method according to the invention.
FIG. 7 is a schematic cross sectional view of a principal part of a piston manufactured by a modified second embodiment of method according to the invention.
FIG. 8 is a schematic cross sectional view of a p rincipal part of a piston manufactured by a third embodiment of method according to the invention.
FIG. 9 is a schematic cross sectional view of a principal part of a known piston.

### DESCRIPTION OF THE PREFERRED EMBODIMENTS OF THE INVENTION

Now, the present invention will be described in greater detail by way of preferred embodiments of the invention.

### [Embodiment 1]

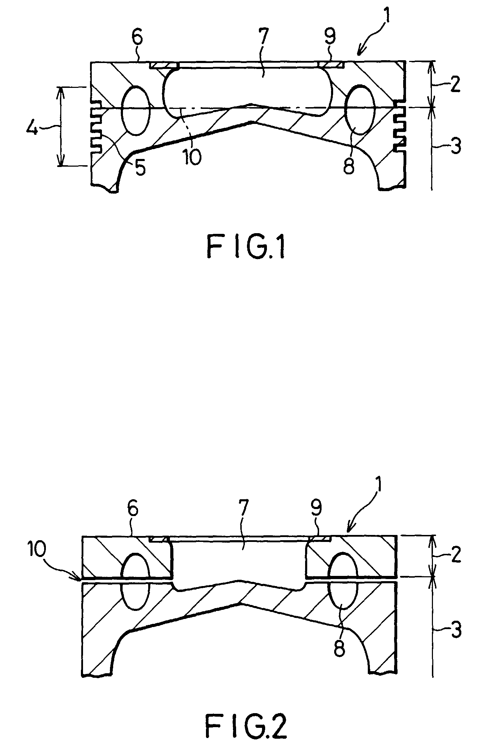

FIG. 1 is a schematic cross sectional view of a principal part of a finished piston manufactured by a first embodiment of method according to the invention. In FIG. 1, there is shown a piston main body 1 that is divided into a top land section 2 carrying thereon as integral part thereof a ring member 9 made of a thermally highly resistive metal material and bonded to the periphery of the opening of the cavity 7 at the top surface 6 of the piston main body 1 and a skirt section 3 separated from the top land section 2 by a dividing surface 10 and provided in the ring belt 4 thereof with ring receiving grooves 5. While an annular cooling cavity 8 is formed around the cavity 7 in FIG. 1, such an annular cooling cavity may not necessarily be provided as far as the first embodiment of the invention is concerned.

Referring to FIG. 1, the top land section 2, the skirt section 3 and the ring member 9 arranged around the periphery of the opening of the cavity 7 are formed by forging and bonded together. FIG. 2 is a schematic cross sectional view of also a principal part of a piston manufactured by a method according to the invention, where the top land section 2 and the skirt section that are formed separately by forging are not united together yet along the dividing surface 10 by utilizing the friction generated under pressure. When an annular cooling cavity 8 is formed around the cavity 7, it is equally divided by the dividing surface 10 as shown in FIG. 2.

According to the invention, each of the top land section 2 and the skirt section 3 is made of a metal material that shows a sufficient level of strength and can easily be cut, while the ring member 9 is made of a metal material that is highly resistive against heat and acids. Metal materials that can be used for the top land section 2 and the skirt section 3 include high sulphur steel and steel added with calcium that are sufficiently strong and easily cut, while metal materials that are high resistive against heat and acids and hence can be used for the ring member 9 include low carbon steel, low sulphur steel and stainless steel.

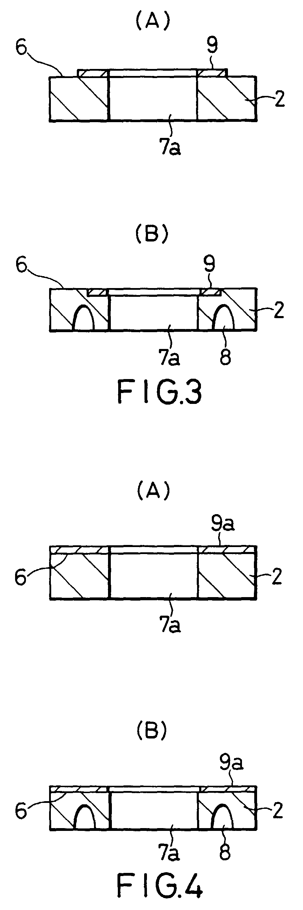

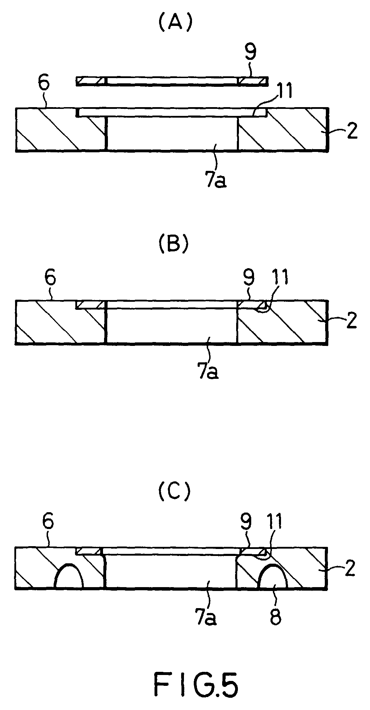

The top land section 2 carrying thereon as integral part thereof a ring member 9 that is made of a thermally highly resistive metal material and bonded to the periphery of the opening of the cavity 7 at the top surface 6 of the piston main body 1 as shown in FIG. 3A is formed in a manner as described below. Firstly, the ring member 9 is dimensioned so as to surround the periphery of the hole 7a at the top surface 6 of the material of the top land section 2 that eventually makes the cavity 7 and placed in contact with the edge of the hole 7a. Then, the ring member 9 is pushed and buried into the peripheral wall of the hole 7a that eventually makes the cavity 7 and the upper half of the annular cavity is formed in the process of making the top land section 2 show its final profile as illustrated in FIG. 3B by forging under pressure, using a mold. While the ring member 9 shown in FIGS. 3A and 3B has an outer diameter that is sufficient for surrounding the opening of the hole 7a, it may alternatively be made to have an outer diameter that agrees with the outer diameter of the top surface of the top land section 2 and buried into the entire top surface of the top land section 2 to be become an integral part of the latter as shown in FIGS. 4A and 4B. In the case of FIGS. 4A and 4B, preferably the top land section 2 and the ring member 9 are bonded together under pressure in advance in order to eliminate the risk of oxidation and scaling of the interface of the top land section 2 and the ring member 9. As a result, the interface is held clean and the interface can be quantitatively defined to facilitate the control of the manufacturing operation.

Still alternatively, the top land section 2 may be provided along the periphery of the opening of the hole 7a at the top surface thereof with an annular groove 11 having a diameter substantially same as the outer diameter of the ring member 9 as shown in FIG. 5A and the ring member 9 is fitted into the annular groove 11 as shown in FIG. 5B before the top land section 2 is made to show its final profile as illustrated in FIG. 5C by forging under pressure, using a mold. With this arrangement again, the ring member 9 is buried into the peripheral wall of the hole 7a that eventually makes the cavity 7 to become an integral part of the top land section 2.

The above operation of bonding the ring member 9 to the top land section 2 by forging is conducted at temperature between 1,100 and 1,300 EC under high pressure so that the materials may be plastically mobilized. The ring member 9 can be securely bonded to the top land section 2 under the above conditions because these conditions are satisfactory in terms of both forging temperature and forging/bonding pressure. However, because of the high temperature used for the forging/bonding process, scales of oxides can be produced and decarbonization can occur to reduce the bonding strength due to the high temperature used in the process. Therefore, the operation using the high temperature should be conducted in an anti-oxidation atmosphere typically containing inert gas and scales have to be removed after the forging/bonding process.

Then, the complete top land section 2 and the skirt section 3 that is formed by forging in a separate process are united along their dividing surfaces 10 by solid phase bonding, utilizing the friction generated under pressure as shown in FIG. 2. Note that diffusion bonding or electron beam welding may alternatively be used.

As the top land section 2 and the skirt section 3 are bonded together by solid phase bonding, the hole 7a in the top land section 2 and the recess that is formed in the skirt section 3 and corresponds to the hole 7a are put together to produce a bottomed cavity 7 in the piston. While burrs may be formed around the bonded area of the top land section 2 and that of the skirt section 3 if solid phase bonding is used, such burrs can be cut and removed when the ring belt 4 is polished and finished or when the ring receiving grooves 5 are formed by machining to produce a finished piston as partly shown in FIG. 1.

### [Advantages of Embodiment 1]

As described above, according to the invention, it is possible to produce a piston that satisfies the requirement of exceeding any conventional pistons in terms of output power, maximum explosion pressure and average effective pressure. Additionally, the cavity edge is made to show an enhanced level of strength by the provision of a ring member that is highly resistive against heat and acids and fissures are prevented from occurring along the periphery of the cavity in a piston manufactured by Embodiment 1 of method according to the invention. Still additionally, the cavity edge can be made to show a sharp profile. As a result, any residual air remaining on the top of the piston squishes fiercely at and near the upper dead point of compression of the engine and turbulences are produced along the boundaries of the squishing air flows to accelerate the mixing of air and the atomised particles of the fuel injected into the cavity and increase the efficiency of combustion. Thus, the piston that is prepared by forging is of high quality and adapted to be manufactured at low cost to provide a high output power level, satisfying the requirement of cleansing the exhaust gas and reducing the fuel consumption rate at the same time.

### [Embodiment 2]

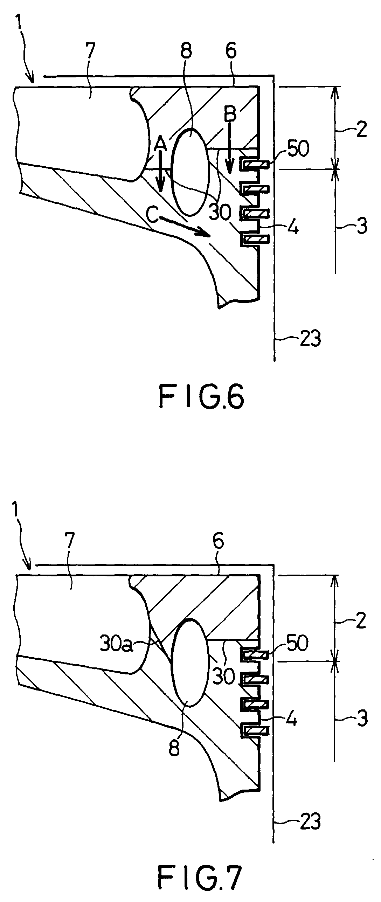

FIG. 6 is a schematic cross sectional view of a principal part of a piston manufactured by a second embodiment of method according to the invention. Referring to FIG. 6, there are shown a piston main body 1 having a cavity 7 formed therein and exposed to the top surface 6 thereof and an additionally annular cavity 8 arranged around the cavity 7 for circulating cooling liquid such as lubricant oil. The piston main body 1 comprises a top land section 2 and a skirt section 3 separated by dividing surfaces 30 that are exposed to the annular cavity 8 to divide it into upper and lower parts. The skirt section 3 is provided with a ring belt 4, where a predetermined number of ring receiving grooves are formed and rings 50 are respectively fitted into them. Reference numeral 23 in FIG. 6 denotes an engine cylinder.

Said top land section 2 is typically made of sulphur copper selected as metal material that is resistive against fissures, while the skirt section 3 is normally made of high sulphur steel or steel added with calcium because they are sufficiently strong and easily cut. The top land section 2 and the skirt section 3 are formed separately by forging. As pointed out above, the top land section 2 and the skirt section 3 are separated by dividing surfaces 20 that are exposed to the annular cavity 8 to divide it into upper and lower parts. Then, the top land section 2 and the skirt section 3 are united along the dividing surfaces 30 by diffusion bonding or electron beam welding in a bonding apparatus. Alternatively, solid phase bonding may be used for uniting them.

While the dividing surfaces 30 are exposed to the cooling annular cavity 8 at different levels as shown in FIG. 6, they may be made flush with each other. Still alternatively, the dividing surface 30 connecting the outer periphery of the top land section 2 and the annular cavity 8 may be made to run in parallel with the top surface 6 of the top land section 2, while the dividing surface 30a connecting the cavity 7 and the annular cavity 8 may be made to slope down from the peripheral wall of the cavity 7 toward the annular cavity 8. With this arrangement again, the top land section 2 and the skirt section 3 are formed separately by forging and united along the dividing surfaces 30 by diffusion bonding or electron beam welding in a bonding apparatus.

### [Embodiment 3]

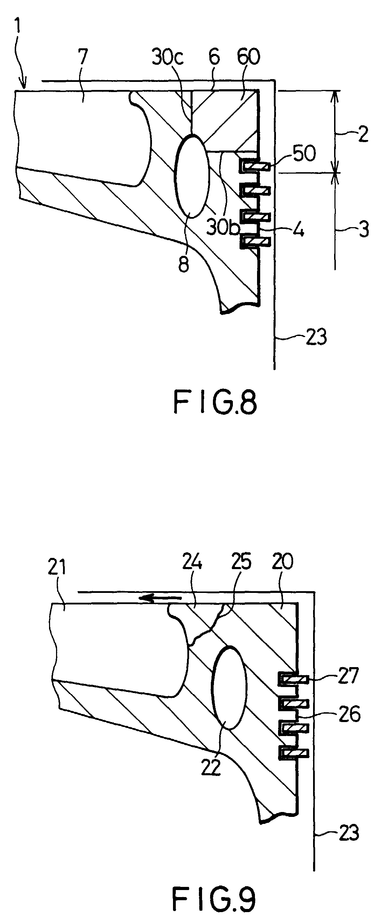

FIG. 8 is a schematic cross sectional view of a principal part of a piston manufactured by a third embodiment of method according to the invention. Referring to FIG. 8, there are shown a piston main body 1 having a cavity 7 formed therein and exposed to the top surface 6 thereof and an additionally annular cavity 8 arranged around the cavity 7 for circulating cooling liquid such as lubricant oil. The skirt section 3 is provided with a ring belt 4, where a predetermined number of ring receiving grooves are formed and rings 50 are respectively fitted into them. Reference numeral 23 in FIG. 8 denotes an engine cylinder.

The piston main body 1 of a piston manufactured by the third embodiment of manufacturing method according to the invention 1 also comprises a top land section 2 and a skirt section 3 but they are not separated from each other. Rather, the piston main body 1 has a peripheral notch at the top land section 2, which notch is defined by a first dividing surface 30b running in parallel with the top surface 8 of the top land section 2 and exposed to the annular cavity 8 and a second dividing surface 30c running perpendicularly relative to the first dividing surface 30b between the top surface 6 of the top land section 2 and the annular cavity 8, and an annular body 60 for filling the peripheral notch. The piston main body 1 and the annular body 60 are formed separately by forging and united along the first dividing surface 30b and the second dividing surface 30c by diffusion bonding or electron beam welding in a bonding apparatus. Alternatively, solid phase bonding may be used for uniting them.

While burrs may be formed in the annular cavity 8 by diffusion boding that is conducted in a bonding apparatus, such burrs operate as so many fins to enhance the cooling effect of the lubricant oil flowing in the annular cavity 8. Additionally, the thickness of the wall surrounding the annular cavity 8 can be reduced by improving the accuracy of forming it in the forging process and using a material adapted to improve the strength of the piston so that the distance of transmission of heat can be reduced to further enhance the cooling effect.

As a result, the effect of cooling the piston in areas surrounding the cavity 7 is improved to suppress the risk of producing fissures in the peripheral region of the cavity 7, while the ring belt 4 is cooled more effectively, so that the wear of the uppermost ring and the scuffing of lubricant oil in the ring receiving grooves can be prevented from taking place.

As described above, with the third embodiment of manufacturing method according to the invention, a peripheral notch as shown in FIG. 8 is formed in the top land section 2 or in the top land section 2 and the skirt section 3 of the piston main body as shown in FIGS. 6 and 7 along with an annular body 60 that is adapted to fill the notch and formed also by forging and then the piston main body 1 and the annular body 60 are bonded together under pressure by diffusion bonding or by an appropriate welding means such as an electron beam in a bonding apparatus. This arrangement is advantageous in that an electron beam can be irradiated accurately and easily from an electron gun because the piston main body is separated into two parts. Particularly, if an inclined dividing surface 30a is used as shown in FIG. 7, a large bonding area is secured to provide an improved bonding strength when the cavity 7 and the annular cavity 8 are separated by a relatively thin wall.

As pointed out earlier, the residual air remaining on the top of the piston squishes fiercely at and near the upper dead point of compression of the engine if the cavity edge section is made to show a sharp profile. If the cavity edge section has a small radius of curvature, turbulences are produced along the boundaries of the squishing air flows to accelerate the mixing of air and the atomised particles of the fuel injected into the cavity and increase the efficiency of combustion. On the other hand, as the cavity edge section is made to show a sharp profile, it is apt to produce a heat spot there and its thermal resistance is reduced to give rise to fissures along the periphery of the cavity and curtail the service life of the piston. However, according to the present invention, since the thickness of the wall surrounding the annular cavity 8 is reduced to reduce the distance of transmission of heat and improve the effect of cooling the piston, the risk of producing fissures is minimized if the cavity edge section is made to show a sharp profile in order to increase the efficiency of combustion and raise the output power of the engine.

Additionally, according to the invention, the explosion pressure is dispersedly transmitted as indicated by arrows A, B and C in FIG. 6 so that consequently the hollow structure of the annular cavity 8 is more securely maintained and the risk of deformation of the annular cavity 8 due to the explosion pressure is minimized.

### [Advantages of Embodiments 2 and 3]

As described above in detail, with a method of manufacturing a piston an internal combustion engine according to the invention, it is possible to provide the cavity of the piston with a cooling annular cavity that surrounds it, although such a provision is not possible with any known method of manufacturing a piston by forging. Therefore, it is now possible to produce a piston by forging that satisfies the requirement of exceeding any conventional pistons in terms of output power, maximum explosion pressure and average effective pressure and performs well than ever for cooling the peripheral areas of the cavity of the forged piston in order to suppress the generation of fissures, the wear of the uppermost ring and the scuffing of lubricant oil. Additionally, the cavity edge can be made to show a sharp profile. As a result, any residual air remaining on the top of the piston squishes fiercely at and near the upper dead point of compression of the engine and turbulences are produced along the boundaries of the squishing air flows to accelerate the mixing of air and the atomised particles of the fuel injected into the cavity and increase the efficiency of combustion. Thus, the piston that is prepared by forging is of high quality and adapted to be manufactured at low cost to provide a high output power level, satisfying the requirement of cleansing the exhaust gas and reducing the fuel consumption rate at the same time.

Note that, in the above Embodiments 1 through 3, the top land section and the skirt section may be made of a steel material other than high sulphur steel or steel added with calcium. Alternatively, the top land section may be made of high sulphur steel and or steel added with calcium, while the skirt section may be made of cast iron. Still alternatively, both the top land section and the skirt section may be made of an aluminium alloy. Still alternatively, the top land section may be made of sulphur steel, high sulphur steel of steel added with calcium, while the skirt section may be made of an aluminium alloy.

## Claims

1. A method of manufacturing a piston of internal combustion engine comprising a top land section with a cavity formed on the top surface thereof and a skirt section, said method comprising:
forming said top land section and said skirt section separately by forging a same material or respective materials that are different from each other; and
bonding and uniting said top land section and said skirt section along the dividing surfaces thereof.

2. A method of manufacturing a piston of internal combustion engine comprising a top land section with a cavity formed on the top surface thereof and a skirt section, said method comprising:
forming said top land section and said skirt section separately by forging a same material or respective materials that are different from each other; and
bonding and uniting said top land section and said skirt section along the dividing surfaces thereof by forming a ring member around the periphery of the opening of said cavity by forging a metal material highly resistive against heat and acids.

3. A method of manufacturing a piston of internal combustion engine comprising a top land section with a cavity formed on the top surface thereof and a skirt section, an cooling annular cavity being formed around said cavity, said method comprising:
forming said top land section and said skirt section separately by forging a same material or respective materials that are different from each other; and
bonding and uniting said top land section and said skirt section along the dividing surfaces thereof.

4. A method of manufacturing a piston of internal combustion engine comprising a top land section with a cavity formed on the top surface thereof and a skirt section, an cooling annular cavity being formed around said cavity, said method comprising:
forming a piston main body having a peripheral notch at the top land section and an annular body for filling said peripheral notch by forging, said piston main body and said annular body being separated from each other by a first dividing surface including said annular cavity and a second dividing surface including part of the top surface of the top land section and the annular cavity and arranged perpendicularly relative to said first dividing surface, said first and second dividing surfaces being exposed to the periphery of said top land section; and
bonding and uniting said piston main body and said annular body along said first and second dividing surfaces.

5. A method of manufacturing a piston of internal combustion engine according to any of claims 1 through 4, wherein the dividing surfaces separating the top land section and the skirt section are united by solid phase bonding, utilizing the friction generated under pressure, diffusion bonding or electron beam welding.
